# EUROPÄISCHE PATENTSCHRIFT

(11) **EP 3 786 575 B1**
(45) Veröffentlichungstag und Bekanntmachung des Hinweises auf die Patenterteilung: **22.12.2021**
(21) Anmeldenummer: 20183308.4
(22) Anmeldetag: 30.06.2020
(51) Int. Cl.: G01B 11/24, G01B 11/06, G01B 11/14

(54) **OPTISCHE CHROMATISCH-KONFOKALE MESSVORRICHTUNG UND VERFAHREN ZUR OPTISCHEN CHROMATISCHEN KONFOKALEN MESSUNG**
OPTICAL CHROMATIC CONFOCAL MEASURING APPARATUS AND METHOD
DISPOSITIF ET PROCÉDÉ DE MESURE OPTIQUE CHROMATIQUE CONFOCAL

(30) Priorität: 26.08.2019 DE 102019122866
(43) Veröffentlichungstag der Anmeldung: 03.03.2021
(73) Patentinhaber: Precitec Optronik GmbH, 63263 Neu-Isenburg (DE)
(72) Erfinder: Dietz, Christoph, 63179 Obertshausen (DE)
(74) Vertreter: Ostertag & Partner Patentanwälte mbB

(56) Entgegenhaltungen:
- EP-A1- 2 950 039
- EP-A1- 3 176 538
- DE-A1-102008 017 481
- DE-A1-102012 111 008
- DE-A1-102016 221 630
- DE-A1-102018 201 211
- US-A1- 2015 085 360
- US-A1- 2018 356 208
- US-B1- 9 494 529

## Beschreibung

Die Erfindung betrifft eine optische Messvorrichtung zur Messung von Abständen und/ oder Dicken eines Messobjekts, umfassend eine erste Lichtquelle, welche polychromatisches Messlicht emittiert, einen ersten Lichtwellenleiter, durch welchen Messlicht tritt und dessen Ende eine erste konfokale Apertur bildet und eine Abbildungsoptik, welche geeignet ist, eine chromatische Fokusverschiebung des Messlichts hervorzurufen und die erste konfokale Apertur in einen Messbereich abzubilden. Verschiedene Wellenlängen sind dadurch in verschiedenen Höhen fokussiert. Vom Messobjekt reflektiertes Messlicht wird wieder zurück auf die erste konfokale Apertur oder eine dritte konfokale Apertur abgebildet. Die Messvorrichtung umfasst auch eine Empfangs- und Auswerteeinheit, welche ausgebildet ist, um die Intensität des vom Messobjekt reflektierten und zurück durch die erste konfokale Apertur oder dritte konfokale Apertur getretenes Messlicht in Abhängigkeit der Wellenlänge zu messen und daraus Abstände und/oder Dicken zu bestimmen.

Aus der US 5,785,651 A ist ein chromatisch-konfokales Mikroskop bekannt, welches eingerichtet ist, ein Profil eines Objektes zu vermessen. In einem Ausführungsbeispiel ist dabei eine polychromatische Lichtquelle über ein faseroptisches Kabel mit einer Abbildungsoptik verbunden, wobei das Ende des faseroptischen Kabels die konfokale Apertur des chromatisch-konfokalen Mikroskops bildet.

Ein Nachteil der bekannten chromatisch-konfokalen Messvorrichtungen ist es, dass über die verwendete Aperturgröße eine gegenläufige Abhängigkeit zwischen der erreichbaren Auflösung und der Intensität des Messlichts (und damit der Stärke des Signals) besteht. Der Aufbau der Vorrichtung, d.h. die verwendete Lichtquelle, verwendete Lichtwellenleiter, Abbildungsverhältnis und Empfangseinheit geben dabei einen festen Kompromiss aus Auflösung und Signalstärke vor. Die Auflösung ist begrenzt durch den konfokalen Konus, welcher durch Abbildung der konfokalen Apertur auf dem Messobjekt entsteht sowie meistens durch ein in der Empfangseinheit verwendetes Spektrometer.

Dadurch ist es nicht möglich, eine Vorrichtung zu bauen, die sowohl eine sehr gute Auflösung ermöglicht, was zum Beispiel nötig ist, wenn dünne Schichten gemessen werden sollen, als auch auf Messproben einsetzbar ist, die Oberflächen mit schlechter Reflektivität bzw. teilweise absorbierende Schichten beinhalten. Besonders problematisch ist dies bei Messobjekten, bei denen beide Situationen auftreten, da diese nicht mit einer einzigen Vorrichtung vollständig vermessen werden können.

US 9 494 529 B1 und DE 10 2018 201211 A1 offenbaren jeweils eine optische chromatischkonfokale Messvorrichtung zur Messung vom Profil eines Messobjekts, mit einer Mehrzahl von zueinander parallelen optischen Fasern deren Enden eine Mehrzahl von konfokalen Aperturen definieren, um die Probe zu beleuchten und das reflektierte Licht zu empfangen.

Aufgabe der Erfindung ist es somit, eine Messvorrichtung, wie in Ansprüchen 1 und 11 beansprucht, sowie ein Verfahren, wie in Anspruch 12 beansprucht, zum Betreiben der Messvorrichtung anzugeben, welche es ermöglicht, Objekte mit unterschiedlichen Anforderungen an Auflösung und Signalstärke zu vermessen.

Gemäß der Erfindung nach Anspruch 1 wird die Aufgabe dadurch gelöst, dass der erste Lichtwellenleiter einen geringen Durchmesser hat und die Messvorrichtung einen zweiten Lichtwellenleiter umfasst, dessen Durchmesser größer ist als der Durchmesser des ersten Lichtwellenleiters, und welcher parallel zum ersten Lichtwellenleiter geführt wird. Das Ende des zweiten Lichtwellenleiters stellt eine zweite konfokale Apertur dar. Die Empfangs- und Auswerteeinheit ist ausgebildet, auch die Intensität des vom Messobjekt reflektierten und zurück durch die zweite konfokale Apertur oder eine vierte konfokale Apertur getretenes Messlicht in Abhängigkeit der Wellenlänge zu messen und daraus Abstände und/oder Dicken zu bestimmen.

Es werden also mindestens zwei Lichtwellenleiter unterschiedlichen Querschnitts parallel verwendet. Dabei bildet das Ende der Faser mit dem kleineren Querschnitt eine kleinere konfokale Apertur und ermöglicht eine Messung mit besserer Auflösung (lateral und Abstand), während die Faser mit dem größeren Querschnitt mehr Licht transportiert und daher auch mehr Signal.

Nach einer bevorzugten Ausführungsform werden dabei Lichtquelle und Empfangs- und Auswerteeinheit jeweils mittels Faserkoppler mit dem ersten bzw. zweiten Lichtwellenleiter verbunden. Nach einer weiteren bevorzugten Ausführungsform werden parallel zum ersten und zweiten Lichtwellenleiter noch ein dritter und vierter Lichtwellenleiter zu der Abbildungsoptik geführt. Dabei wird die dritte konfokale Apertur durch das Ende des dritten Lichtwellenleiters gebildet und die vierte konfokale Apertur wird durch das Ende des vierten Lichtwellenleiters gebildet, wobei die erste und dritte konfokale Apertur konfokal zueinander sind und die zweite und vierte konfokale Apertur konfokal zueinander sind. Der Durchmesser des dritten Lichtwellenleiters entspricht dem Durchmesser des ersten Lichtwellenleiters und der Durchmesser des vierten Lichtwellenleiters entspricht dem Durchmesser des zweiten Lichtwellenleiters.

Bevorzugt ist die Empfangs- und Auswerteeinheit dazu eingerichtet, ein erstes Spektrum und ein zweites Spektrum zu generieren, wobei das erste Spektrum Intensitäten durch die erste konfokale Apertur oder dritte konfokale Apertur getretenes Messlichts in Abhängigkeit der Wellenlänge darstellt und das zweite Spektrum Intensitäten durch die zweite konfokale Apertur oder die vierte konfokale Apertur getretenes Messlichts in Abhängigkeit der Wellenlänge darstellt.

Nach einer bevorzugten Ausführungsform der Erfindung umfasst die Messvorrichtung neben dem ersten und zweiten Lichtwellenleiter noch weitere parallel geführte Lichtwellenleiter, deren Enden weitere konfokale Aperturen darstellen und unterschiedliche Querschnitte aufweisen. Das Prinzip der Erfindung wird auf eine größere Anzahl von Lichtwellenleitern erweitert, alle Merkmale und Betrachtungen zu Ausführungsformen mit dem ersten und zweiten Lichtwellenleiter gelten analog.

Bevorzugt umfasst die Messvorrichtung eine zweite Lichtquelle. Vorteilhaft wird Licht der ersten Lichtquelle in den ersten Lichtwellenleiter eingekoppelt und Licht der zweiten Lichtquelle in den zweiten Lichtwellenleiter eingekoppelt.

Besonders bevorzugt werden die erste Lichtquelle und die zweite Lichtquelle jeweils in zeitlichen Intervallen betrieben, wobei die erste Lichtquelle und die zweite Lichtquelle nicht gleichzeitig eingeschaltet sind. Das bedeutet, dass zunächst die erste Lichtquelle eingeschaltet ist, anschließend die erste Lichtquelle ausgeschaltet und etwa zeitgleich die zweite Lichtquelle angeschaltet wird, dann die zweite Lichtquelle ausgeschaltet und etwa zeitgleich die erste Lichtquelle wieder angeschaltet wird und so weiter. Vorteilhafterweise sind die zeitlichen Intervalle dabei von der gleichen Größenordnung wie ein Messtakt der Empfangs- und Auswerteeinheit. Insbesondere kann ein zeitliches Intervall je einem Messtakt oder einem festen Bruchteil (bspw. eine Hälfte) eines Messtakts entsprechen.

Vorteilhafterweise ist jedes Intervall, in dem die erste Lichtquelle betrieben wird, gleich lang und jedes Intervall in dem die zweite Lichtquelle betrieben wird ist gleich lang. Die Intervalle der ersten Lichtquelle und der zweiten Lichtquelle können zueinander gleich lang sein, alternativ können auch verschiedene Längen gewählt werden, um beispielsweise ein Signal noch weiter zu verstärken.

Da die Lichtquellen jeweils nur einen Teil der Zeit betrieben werden, können sie typischerweise mit einer höheren Intensität betrieben werden, als dies im Dauerbetrieb der Fall wäre.

Vorteilhafterweise umfasst die Empfangs- und Auswerteeinheit lediglich ein einziges Spektrometer, insbesondere mit lediglich einer Detektorzeile, welches eingerichtet ist, die Intensitäten des vom Messobjekt reflektierten und zurück durch die erste konfokale Apertur getretenes Messlichts in Abhängigkeit der Wellenlänge zu messen als auch die Intensitäten des vom Messobjekt reflektierten und zurück durch die zweite konfokale Apertur getretenes Messlichts in Abhängigkeit der Wellenlänge zu messen. Die Verwendung nur eines Spektrometers mit nur einer Detektorzeile bietet eine Kostenersparnis.

Das Licht, welches über den ersten und den zweiten Lichtwellenleiter in der Empfangsund Auswerteeinheit eintrifft, wird nicht zusammen ausgewertet, sondern die Lichtquellen werden abwechselnd geschaltet und zwei Spektren je über einen Teil-Messtakt aufgenommen. Das Signal der dünnen Faser ist dabei schwächer.

Bevorzugt ist ein Messtakt des Spektrometers mit den zeitlichen Schalt-Intervallen der ersten und zweiten Lichtquelle synchronisiert. Durch Synchronisation mit den Lichtquellen lassen sich die Signale unterscheiden und dem ersten oder zweiten Lichtwellenleiter zuordnen.

In einer alternativen Ausführungsform der Erfindung werden die erste und zweite Lichtquelle durchgehend betrieben. In diesem Fall muss die Empfangs- und Auswerteeinheit zwei Spektrometer, oder zumindest zwei Detektorzeilen innerhalb eines Spektrometers umfassen, wobei das Licht der unterschiedlichen Lichtwellenleiter auf verschiedene Detektorzeilen geleitet wird.

Bevorzugt hat der erste Lichtwellenleiter einen Durchmesser von 75-125 µm, insbesondere 100 µm, und der zweite Lichtwellenleiter einen Durchmesser von 10-50 µm, insbesondere 25 µm.

Nach einer bevorzugten Ausführungsform der Erfindung werden Abbildungsoptik und Messobjekt quer zur optischen Achse der Abbildungsoptik relativ zueinander bewegt, so dass Messdaten an mehreren Stellen des Messobjektes aufgenommen werden. Mit einem solchen sog. Scan können Messwerte entlang beliebiger Linien oder sogar eine Oberflächen-Topographie erstellt werden.

Die Scanrichtung kann unabhängig vom Versatz der beiden Messpunkte gewählt werden, wobei Kenntnis der Orientierung von Vorteil ist, um eine Korrektur des Versatzes durchführen zu können. Die Messpunkte sind leicht räumlich versetzt (ca. 100µm) und auch zeitlich versetzt, wenn die Lichtquellen abwechselnd betrieben werden. Wenn während eines Scans von einer Auswertung anhand des Signals des einen Lichtwellenleiters auf eine Auswertung anhand des Signals des anderen Lichtwellenleiters umgeschaltet wird, führt dies zu einem leichten Versatz in der Scanschritt-weite bzw. einem Querversatz, je nach dem, wie die Fasern zur Scanrichtung ausgerichtet sind. Dieser Versatz wird in Kauf genommen, da die Vorrichtung bevorzugt bei Vermessung sich lokal nur langsam ändernder Messobjekte eingesetzt wird.

Eine bevorzugte Anwendung der Messvorrichtung sind Messobjekte aus Glas oder anderem transparenten Material, insbesondere Behälter aus Glas, beispielsweise Flaschen.

Die Erfindung betrifft ebenfalls eine optische Messvorrichtung nach Anspruch 11 zur Messung von Abständen und/oder Dicken eines Messobjekts, umfassend eine erste Lichtquelle, welche polychromatisches Messlicht emittiert, eine erste Lochblende, welche eine erste konfokale Apertur bildet. Die Messvorrichtung umfasst eine Abbildungsoptik, welche geeignet ist, eine chromatische Fokusverschiebung des Messlichts hervorzurufen und die erste konfokale Apertur in einen Messbereich abzubilden, wobei verschiedene Wellenlängen in verschiedenen Höhen fokussiert sind, wobei vom Messobjekt reflektiertes Messlicht wieder zurück auf die erste konfokale Apertur oder eine dritte konfokale Apertur abgebildet wird. Ferner umfasst die Messvorrichtung eine Empfangs- und Auswerteeinheit, welche ausgebildet ist, um die Intensität des vom Messobjekt reflektierten und zurück durch die erste konfokale Apertur oder dritte konfokale Apertur getretenes Messlicht in Abhängigkeit der Wellenlänge zu messen und daraus Abstände und/oder Dicken zu bestimmen. Erfindungsgemäß hat die erste konfokale Apertur einen geringen Durchmesser und die Messvorrichtung umfasst eine zweite Lochblende, welche eine zweite konfokale Apertur bildet, wobei der Durchmesser der zweiten konfokalen Apertur größer ist als der Durchmesser der ersten konfokalen Apertur, wobei die Empfangs- und Auswerteeinheit ausgebildet ist, auch die Intensität des vom Messobjekt reflektierten und zurück durch die zweite konfokale Apertur oder eine vierte konfokale Apertur getretenes Messlicht in Abhängigkeit der Wellenlänge zu messen und daraus Abstände und/oder Dicken zu bestimmen.

Bevorzugt werden für Beleuchtung und Empfang verschiedene Lochblenden verwendet (erste und zweite konfokale Apertur für Beleuchtung und dritte sowie vierte Apertur für Empfang). Die Lochblenden werden konfokal aufeinander ausgerichtet. Der Durchmesser der dritten konfokalen Apertur entspricht dabei dem Durchmesser der ersten konfokalen Apertur und der Durchmesser der vierten konfokalen Apertur entspricht dem Durchmesser der zweiten konfokalen Apertur.

Diese Version der Erfindungsgemäßen Vorrichtung funktioniert nach dem gleichen Prinzip wie die oben beschriebene Version der Erfindung, da die Lochblenden die gleiche Funktion erfüllen wie die Faserenden. Alle in Verbindung mit der oben beschriebenen Version der Erfindung beschriebenen Merkmale können entsprechend kombiniert werden. Der Transport von Messlicht zwischen Lichtquelle und erster und zweiter konfokaler Apertur, sowie zwischen konfokalen Aperturen und Empfangs- und Auswerteinheit kann entweder über Freistrahl erfolgen, oder über Lichtwellenleiter, wobei die jeweiligen Lichtwellenleiter mindestens den Durchmesser der entsprechenden Lochblende haben.

Vorteilhafterweise ist die Empfangs- und Auswerteeinheit unmittelbar hinter den Lochblenden, welche die dritte und vierte konfokale Apertur bilden, angeordnet.

Es ist auch möglich, in einer Mischform die erste und zweite konfokale Apertur (Beleuchtung) als Faserenden auszuführen und die dritte und vierte konfokale Apertur als Lochblenden.

Die Erfindung betrifft auch ein Verfahren zur optischen Messung von Abständen und/oder Dicken eines Messobjekts nach Anspruch 12, wobei durch eine erste konfokale Apertur tretendes polychromatisches Licht durch ein Abbildungsoptik mit chromatischer Fokusverschiebung auf das Messobjekt abgebildet wird, und die erste konfokale Apertur durch ein Ende eines ersten Lichtwellenleiters gebildet wird. Ein erstes Spektrum des vom Messobjekt reflektierten und durch die Abbildungsoptik und die erste konfokale Apertur und den ersten Lichtwellenleiters oder durch eine dritte konfokale Apertur und einen dritten Lichtwellenleiter getretenen Lichts wird generiert. Eine zweite konfokale Apertur, gebildet durch das Ende eines zweiten Lichtwellenleiters, wird ebenfalls durch die Abbildungsoptik auf das Messobjekt abgebildet. Der Querschnitt des zweiten Lichtwellenleiters ist größer als der Querschnitt des ersten Lichtwellenleiters. Ein zweites Spektrum des vom Messobjekt reflektierten und durch die Abbildungsoptik und die zweite konfokale Apertur und den zweiten Lichtwellenleiter oder eine vierte konfokale Apertur und einen vierten Lichtwellenleiter getretenes Licht wird generiert.

Bevorzugt wird jeweils in wiederholten zeitlichen Intervallen Licht abwechselnd durch entweder den ersten Lichtwellenleiter oder den zweiten Lichtwellenleiter auf das Messobjekt geleitet, wobei das erste Spektrum jeweils während den Intervallen generiert wird, in denen Licht durch den ersten Lichtwellenleiter auf das Objekt geleitet wird und das zweite Spektrum jeweils während den Intervallen generiert wird, in denen Licht durch den zweiten Lichtwellenleiter auf das Objekt geleitet wird.

Bevorzugt wird ein charakteristischer Wert, insbesondere ein lokales Maximum der Intensität des ersten Spektrums bestimmt und mindestens ein Abstands- oder Dickenwert aus dem ersten Spektrum abgeleitet und ausgegeben, wenn der charakteristische Wert oberhalb eines Grenzwerts liegt. Anderenfalls wird mindestens ein Abstands- oder Dickenwert aus dem zweiten Spektrum abgeleitet und ausgegeben.

Es wird also zwischen den beiden Spektren entschieden, welche ein besser auswertbares Signal liefert (Amplitude, Trennbarkeit). Aus diesem Spektrum werden Abstands- bzw. Dickenwerte berechnet. Die Entscheidung erfolgt bevorzugt anhand der Intensität. Dabei wird im Normalfall das Signal mit der besseren Auflösung verwendet, wenn dieses allerdings nicht ausreichend Signalstärke aufweist, so wird auf das andere Spektrum zurückgegriffen.

Es ist ebenfalls bevorzugt, Ausgabewerte aus einer Kombination beider Spektren zu berechnen (bspw. gewichtete Summe oder stückweise ausgewählt), sofern beide ein auswertbares Signal liefern.

Nachfolgend werden Ausführungsbeispiele der Erfindung anhand von Figuren näher erläutert. Gleiche Bezugszeichen bezeichnen dabei gleiche Teile.

### Es zeigen:

- Fig. 1: eine optische Messvorrichtung, wie sie aus dem Stand der Technik bekannt ist;
- Fig. 2: eine Messvorrichtung nach einem bevorzugten Ausführungsbeispiel der Erfindung;
- Fig. 3: eine Messvorrichtung nach einem weiteren bevorzugten Ausführungsbeispiel der Erfindung;

Fig. 4 schematisch einen Ablauf eines beispielsgemäßen Verfahrens.

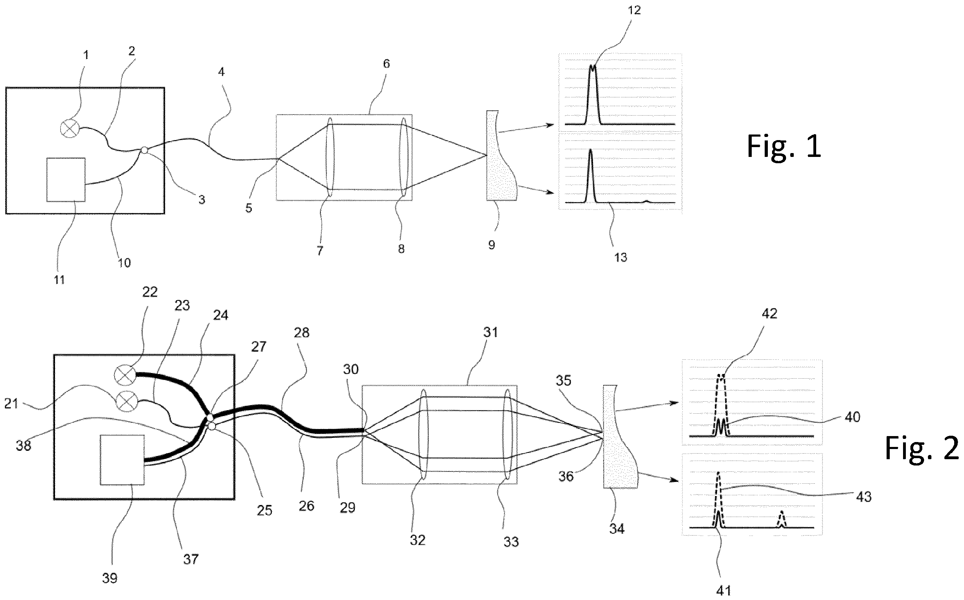

Fig. 1 zeigt eine optische Messvorrichtung, wie sie aus dem Stand der Technik bekannt ist. Die Vorrichtung umfasst eine Lichtquelle 1, welche polychromatisches Messlicht emittiert. Messlicht der Lichtquelle 1 wird in einen Lichtwellenleiter 2 eingekoppelt und über eine Koppelstelle 3 in einen ersten Lichtwellenleiter 4 geleitet. Das Ende des Lichtwellenleiters 4 bildet eine konfokale Apertur 5. Aus der konfokalen Apertur 5 tritt das Messlicht aus und wird durch eine Abbildungsoptik 6, welche beispielsgemäß die Linsen 7 und 8 umfasst, auf ein Messobjekt 9 gerichtet. Die Abbildungsoptik 6 ist dabei so gestaltet, dass sie eine chromatische Fokusverschiebung hervorruft, derart, dass Licht unterschiedlicher Wellenlängen auf unterschiedlichen Höhen entlang der optischen Achse des Abbildungsoptik 6 abgebildet werden.

Vom Messobjekt 9 reflektiertes Licht tritt zurück durch die Abbildungsoptik 6 auf die konfokale Apertur 5. Nach dem chromatisch-konfokalen Prinzip wird dabei nur Licht derjenigen Wellenlänge scharf auf die konfokale Apertur 5 abgebildet, welches auch auf dem Messobjekt 9 fokussiert war. Licht dieser Wellenlänge tritt also mit maximaler Intensität wieder in den ersten Lichtwellenleiter 4 ein.

Durch die Koppelstelle 3 wird zumindest ein Teil des empfangenen Lichts aus dem ersten Lichtwellenleiter 4 in einen Lichtwellenleiter 10 geleitet. Durch diesen gelangt das Licht in eine Empfangs- und Auswerteeinheit 11.

Beispielsgemäß werden Signale, welche von Reflektionen an Vorder- und Rückseite des Messobjekts 9 herrühren ausgewertet.

Handelt es sich bei dem Messobjekt 9 zum Beispiel um ein Objekt variabler Dicke, so ist an verschiedenen Stellen mit verschiedenen Signalformen zu rechnen. Die Graphen 12 und 13 zeigen schematisch die empfangene Intensität in Abhängigkeit der Wellenlänge (Spektrum). Der Graph 12 zeigt ein Spektrum an einer eher dünnen Stelle des Messobjekts. Insbesondere ist die Dicke des Messobjekts hier geringer als die vertikale Auflösung der Messvorrichtung. Dabei überlagern sich die Signale der Vorder- und Rückseite, so dass sie nicht mehr unterschieden werden können. Der Graph 13 zeigt ein Spektrum an einer eher dicken Stelle des Messobjekts. Während das Signal der Vorderseite deutlich zu erkennen ist, ist die von der Rückseite kommende Reflektion deutlich reduziert, insbesondere, wenn das Messobjekt einen Teil des Messlichts absorbiert oder streut. Das Signal der Rückseite ist zu klein, um es präzise auszuwerten.

Figur 2 zeigt eine Messvorrichtung nach einem bevorzugten Ausführungsbeispiel der Erfindung.

Die beispielsgemäße Messvorrichtung umfasst eine erste Lichtquelle 21 und eine zweite Lichtquelle 22. Licht der ersten Lichtquelle 21 wird in einen Lichtwellenleiter 23 eingekoppelt, während Licht der zweiten Lichtquelle 22 in einen weiteren Lichtwellenleiter 24 eingekoppelt wird. Über eine erste Koppelstelle 25 wird das Licht aus dem Lichtwellenleiter 23 in einen ersten Lichtwellenleiter 26 eingekoppelt, während über eine zweite Koppelstelle 27 Licht aus dem weiteren Lichtwellenleiter 24 in einen zweiten Lichtwellenleiter 28 eingekoppelt wird. Der zweite Lichtwellenleiter 28 hat dabei einen größeren Querschnitt als der erste Lichtwellenleiter 26. Der erste Lichtwellenleiter 26 und der zweite Lichtwellenleiter 28 werden beispielsgemäß parallel geführt, vorteilhafterweise können die beiden Lichtwellenleiter aneinander befestigt sein oder innerhalb einer gemeinsamen Hülle verlaufen.

Das Ende des ersten Lichtwellenleiters 26 bildet eine erste konfokale Apertur 29 und das Ende des zweiten Lichtwellenleiters 28 bildet eine zweite konfokale Apertur 30. Die erste und zweite konfokale Aperturen 29, 30 sind dabei eng benachbart und auf gleicher Höhe angeordnet, vorzugsweise so nah aneinander, wie es der Querschnitt der Lichtwellenleiter zulässt.

Beispielsgemäß ist der Durchmesser bzw. Querschnitt des ersten Lichtwellenleiters 26 kleiner als der Durchmesser bzw. Querschnitt des zweiten Lichtwellenleiters 28. Dadurch ist auch die zweite konfokale Apertur 30 größer als die erste konfokale Apertur 29. Es kann mehr Licht in den zweiten Lichtwellenleiter eingekoppelt und transportiert werden als in den ersten.

Durch eine Abbildungsoptik 31, beispielsgemäß umfassend die Linsen 32 und 33, werden sowohl die erste konfokale Apertur 29 als auch die zweite konfokale Apertur 30 auf ein Messobjekt 34 abgebildet. Die Abbildungsoptik 31 ist dabei so gestaltet, dass sie eine chromatische Fokusverschiebung hervorruft, derart, dass Licht unterschiedlicher Wellenlängen auf unterschiedlichen Höhen entlang der optischen Achse des Abbildungsoptik 31 abgebildet werden. Die Abbildungspunkte 35 und 36 sind dabei auf dem Messobjekt 34 leicht seitlich versetzt.

Vom Messobjekt 34 reflektiertes Licht tritt wieder durch die Abbildungsoptik 31 und wird auf die erste konfokale Apertur 29 sowie zweite konfokale Apertur 30 abgebildet. Nach dem chromatisch-konfokalen Prinzip wird dabei nur Licht derjenigen Wellenlänge scharf auf die jeweilige konfokale Apertur abgebildet, welches auch auf dem Messobjekt 34 fokussiert war. Dieses Licht wird dann mit maximaler Intensität wieder in die jeweilige konfokale Apertur eingekoppelt. Da die zweite konfokale Apertur 30 größer ist als die erste konfokale Apertur 29 wird durch die zweite konfokale Apertur mehr Licht eingekoppelt. Die kleinere, erste konfokale Apertur 29 erlaubt hingegen eine bessere Auflösung, da Licht, welches nicht fokussiert ist, besser ausgeschlossen wird.

Durch die erste Koppelstelle 25 wird zumindest ein Teil des von der ersten konfokalen Apertur 29 empfangenen Lichts durch einen Lichtwellenleiter 37 auf eine Empfangs- und Auswerteeinheit 39 geleitet. Das durch die zweite konfokale Apertur 30 empfangene Licht wird durch die zweite Koppelstelle 27 und einen Lichtwellenleiter 38 beispielsgemäß ebenfalls in die Empfangs- und Auswerteeinheit 39 geleitet.

Beispielsgemäß umfasst die Empfangs- und Auswerteinheit 39 ein mindestens ein Spektrometer, welches eingerichtet ist, empfangenes Licht nach Wellenlängen aufzuspalten und die Intensität in Abhängigkeit der Wellenlänge zu bestimmen. Aus diesen Daten wird ein Spektrum, also ein Verlauf der Intensität in Abhängigkeit der Wellenlänge erstellt. Ein Maximum der Intensität im Spektrum entspricht dabei einer Höhe (in Richtung der optischen Achse der Abbildungsoptik 31) einer Reflexionsstelle am Messobjekt 34 und damit einem Höhenwert einer Grenzfläche.

Beispielsgemäß wird das Licht sowohl des ersten Lichtwellenleiters 26 als auch des zweiten Lichtwellenleiters 28 auf dasselbe Spektrometer geleitet. In diesem Fall werden die Lichtquellen 21 und 22 abwechselnd angeschaltet, wobei das Auslesen des Spektrometers mit dem Schalttakt der Lichtquellen 21 und 22 synchronisiert wird. Auf diese Weise ist es möglich, separate Spektren für Licht aus dem ersten Lichtwellenleiter 26 und Licht aus dem zweiten Lichtwellenleiter 28 zu erstellen, indem aus dem Licht, welches empfangen wird, während die erste Lichtquelle 21 eingeschaltet ist, ein erstes Spektrum erstellt wird und aus Licht, welches empfangen wird, während die zweite Lichtquelle 22 eingeschaltet ist, ein zweites Spektrum erstellt wird.

Alternativ dazu ist es möglich, zwei Spektrometer zu verwenden, wobei Licht des ersten und zweiten Lichtwellenleiters je separat auf verschiedene Spektrometer geleitet wird. In diesem Fall können beide Lichtquellen gleichzeitig betrieben werden. Mittels der zwei Spektrometer können zwei Spektren erstellt werden, die jeweils eindeutig dem ersten bzw. zweiten Lichtwellenleiter zugeordnet sind.

Die Graphen 40, 41, 42 und 43 zeigen jeweils erste und zweite Spektren an verschiedenen Stellen des Messobjekts. Dabei wird das erste Spektrum jeweils durch eine durchgezogene Linie (Graph 40 und 41) und das zweite Spektrum durch eine gestrichelte Linie (42, 43) dargestellt.

An Stellen, an denen das Messobjekt dünn ist, sind die Maxima im ersten Spektrum (Graph 40) trennbar und damit auswertbar, da bedingt durch den kleineren Querschnitt des Lichtwellenleiters die Auflösung besser ist. Während die Maxima im zweiten Spektrum (Graph 42) zwar vom Betrag höher sind, da der größere zweite Lichtwellenleiter mehr Licht transportiert, sind diese nicht mehr sauber trennbar und erlauben daher keine präzise Messung. Dagegen ist an Stellen, an denen das Messobjekt eher dick ist, der Reflex von der Hinterseite des Objekts oft so schwach, dass das entsprechende Maximum im ersten Spektrum (Graph 41) sehr niedrig und damit schlecht auswertbar ist. Dagegen weist das zweite Spektrum (Graph 43) noch eine ausreichende Amplitude auf.

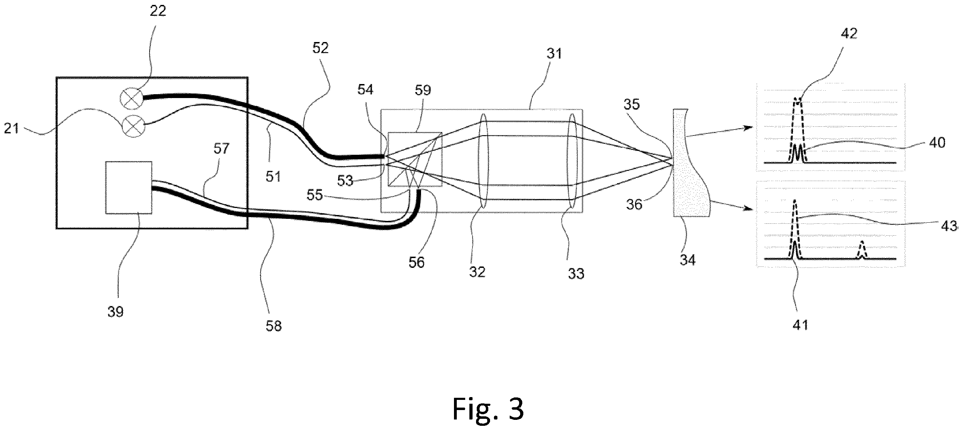

Figur 3 zeigt eine Messvorrichtung nach einem weiteren bevorzugten Ausführungsbeispiel der Erfindung.

Die beispielsgemäße Messvorrichtung umfasst eine erste Lichtquelle 21 und eine zweite Lichtquelle 22. Licht der ersten Lichtquelle 21 wird in einen ersten Lichtwellenleiter 51 eingekoppelt, während Licht der zweiten Lichtquelle 22 in einen zweiten Lichtwellenleiter 52 eingekoppelt wird. Im Unterschied zum Ausführungsbeispiel der Figur 2 werden hier keine Faserkoppelstellen eingesetzt, sondern Licht der Lichtquellen wird direkt in den ersten bzw. zweiten Lichtwellenleiter eingekoppelt und direkt zur Abbildungsoptik geleitet. Der erste Lichtwellenleiter 51 und der zweite Lichtwellenleiter 52 werden beispielsgemäß parallel geführt, vorteilhafterweise können die beiden Lichtwellenleiter aneinander befestigt sein oder innerhalb einer gemeinsamen Hülle verlaufen.

Das Ende des ersten Lichtwellenleiters 51 bildet beispielsgemäß eine erste konfokale Apertur 53 und das Ende des zweiten Lichtwellenleiters 52 bildet eine zweite konfokale Apertur 54. Die erste und zweite konfokale Aperturen 53, 54 sind dabei eng benachbart und auf gleicher Höhe angeordnet, vorzugsweise so nah aneinander, wie es der Querschnitt der Lichtwellenleiter zulässt.

Beispielsgemäß ist der Durchmesser bzw. Querschnitt des ersten Lichtwellenleiters 51 kleiner als der Durchmesser bzw. Querschnitt des zweiten Lichtwellenleiters 52.

Die Abbildungsoptik 31 in diesem Ausführungsbeispiel ist grundsätzlich gleich aufgebaut wie die Abbildungsoptik des Ausführungsbeispiels der Figur 3 und funktioniert nach dem gleichen Prinzip. Die Abbildungsoptik umfasst jedoch zusätzlich einen Strahlteiler 59, welcher bewirkt, dass die erste konfokale Apertur 53 zusätzlich auf eine dritte konfokale Apertur 55 abgebildet wird und die zweite konfokale Apertur 54 auf eine vierte konfokale Apertur 56 abgebildet wird. Die dritte und vierte Apertur wirken hier auf dem Rückweg des Messlichts daher genauso wie die erste und zweite Apertur im Ausführungsbeispiels der Figur 2.

Die dritte konfokale Apertur 55 wird hier durch das Ende eines dritten Lichtwellenleiters 57 gebildet. Die vierte konfokale Apertur 56 wird durch das Ende eines vierten Lichtwellenleiters 58 gebildet. Dabei entspricht der Durchmesser des dritten Lichtwellenleiteers 57 dem Durchmesser des ersten Lichtwellenleiters 51 und der Durchmesser des vierten Lichtwellenleiters 58 entspricht dem Durchmesser des zweiten Lichtwellenleiters 52. Es ist also der Durchmesser des vierten Lichtwellenleiters 58 größer als der Durchmesser des dritten Lichtwellenleiters 57. Der größere Lichtwellenleiter kann mehr Licht transportieren, es wird durch die vierte konfokale Apertur 56 also mehr Licht eingekoppelt, während die kleinere dritte konfokale Apertur 55 eine bessere Auflösung durch besseren Ausschluss der nicht fokussierten Wellenlängen erlaubt.

Auch der dritte Lichtwellenleiter 57 und der vierte Lichtwellenleiter 58 werden beispielsgemäß parallel geführt, vorteilhafterweise gemeinsam mit dem ersten und zweiten Lichtwellenleiter 51, 52.

Durch den dritten Lichtwellenleiter 57 und den vierten Lichtwellenleiter 58 wird das empfangene Licht in die Empfangs- und Auswerteeinheit 39 geleitet. Diese funktioniert wie oben im Zusammenhang mit dem Ausführungsbeispiel der Figur 2 beschrieben.

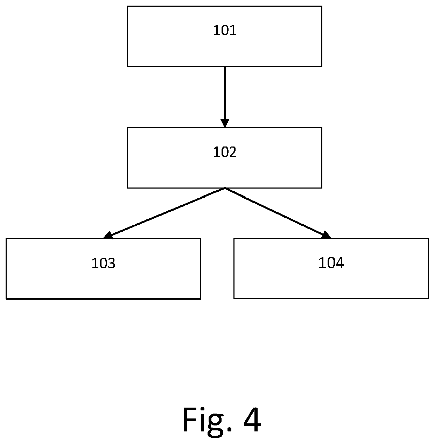

Figur 4 zeigt schematisch einen Ablauf eines Verfahrens nach einem Ausführungsbeispiel der Erfindung.

Zunächst werden in Schritt 101 mittels der erfindungsgemäßen Messvorrichtung zwei Spektren erstellt, wobei jedes der Spektren dem Licht, welches durch den ersten Lichtwellenleiter oder den zweiten Lichtwellenleiter empfangen wird, zugeordnet ist, so wie dies im Zusammenhang mit Figur 2 und 3 beschrieben ist.

Anschließend wird in einem Schritt 102 bestimmt, ob das erste Spektrum (entsprechend dem Licht des ersten Lichtwellenleiters 26) genügend Intensität aufweist, um die erwartete Anzahl von Maxima zuverlässig bestimmen zu können (bspw. zwei Maxima, wenn Vorderund Rückseite eines Messobjekts gemessen werden sollen, oder ein Maximum, wenn nur eine Höheninformation einer Seite benötigt wird). Bevorzugt wird dafür ein Minimum-Grenzwert für die Intensitätsspitzen vorgegeben, der vorteilhafterweise von einem Maß Hintergrundrauschen im Spektrum abhängig sein kann. Ist dies der Fall, so wird mit Schritt 103 fortgefahren.

In Schritt 103 wird anhand der Lage des Maximums bzw. der Maxima mindestens ein Höhen- und/oder Dickenwert bestimmt. Die Bestimmung erfolgt vorteilhafterweise anhand an sich bekannter Verfahren, beispielsweise mittels einer Kalibrationstabelle, welche bestimmten Wellenlängen bzw. Spektrometerpixeln Höhenwerte zuordnet. Dieser Höhenund/oder Dickenwert wird von der Messvorrichtung ausgegeben, bspw. elektronisch und/oder über eine Anzeige.

Erfüllt das erste Spektrum nicht die vorgegebenen Kriterien, so wird mit Schritt 104 fortgefahren. In schritt 104 wird analog zu Schritt 103 mindestens ein Höhen- und/oder Dickenwert bestimmt und ausgegeben, allerdings anhand des zweiten Spektrums.

## Patentansprüche

1. Optische Messvorrichtung zur Messung von Abständen und/oder Dicken eines Messobjekts (34), umfassend
eine erste Lichtquelle (21), welche polychromatisches Messlicht emittiert,
einen ersten Lichtwellenleiter (26, 51), durch welchen Messlicht tritt und dessen Ende eine erste konfokale Apertur (29, 53) bildet,
eine Abbildungsoptik (31), welche geeignet ist, eine chromatische Fokusverschiebung des Messlichts hervorzurufen und die erste konfokale Apertur (29, 53) in einen Messbereich abzubilden, wobei verschiedene Wellenlängen in verschiedenen Höhen fokussiert sind, und wobei vom Messobjekt (34) reflektiertes Messlicht wieder zurück auf die erste konfokale Apertur (29) oder eine dritte konfokale Apertur (55) abgebildet wird,
eine Empfangs- und Auswerteeinheit (39), welche ausgebildet ist, um die Intensität des vom Messobjekt (34) reflektierten und zurück durch die erste konfokale Apertur (29) oder eine dritte konfokale Apertur (55) getretenen Messlichts in Abhängigkeit der Wellenlänge zu messen und daraus Abstände und/oder Dicken zu bestimmen,
**dadurch gekennzeichnet, dass**
die Messvorrichtung einen zweiten Lichtwellenleiter (28, 52) umfasst, welcher parallel zum ersten Lichtwellenleiter (26, 51) geführt wird und dessen Ende eine zweite konfokale Apertur (30, 54) bildet, wobei der Durchmesser der zweiten konfokalen Apertur (30, 54) größer ist als der Durchmesser der ersten konfokalen Apertur (29, 53), und dass
die Empfangs- und Auswerteeinheit (39) ausgebildet ist, auch die Intensität des vom Messobjekt (34) reflektierten und zurück durch die zweite konfokale Apertur (30, 54) oder eine vierte konfokale Apertur (56) getretenen Messlichts in Abhängigkeit der Wellenlänge zu messen und daraus Abstände und/oder Dicken zu bestimmen.

2. Messvorrichtung nach Anspruch 1, **dadurch gekennzeichnet, dass** die Empfangs- und Auswerteeinheit (39) dazu eingerichtet ist, ein erstes Spektrum und ein zweites Spektrum zu generieren, wobei das erste Spektrum Intensitäten durch die erste konfokale Apertur (29, 53) oder dritte konfokale Apertur (55) getretenes Messlichts in Abhängigkeit der Wellenlänge darstellt und das zweite Spektrum Intensitäten durch die zweite konfokale Apertur (30, 54) oder vierte konfokale Apertur (56) getretenes Messlichts in Abhängigkeit der Wellenlänge darstellt.

3. Messvorrichtung nach Anspruch 1 oder 2, **dadurch gekennzeichnet, dass** die Messvorrichtung eine zweite Lichtquelle (22) umfasst.

4. Messvorrichtung nach Anspruch 3, **dadurch gekennzeichnet, dass** die erste Lichtquelle (21) und die zweite Lichtquelle (22) jeweils in zeitlichen Intervallen betrieben werden, wobei die erste Lichtquelle (21) und die zweite Lichtquelle (22) nicht gleichzeitig eingeschaltet sind.

5. Messvorrichtung nach Anspruch 4, **dadurch gekennzeichnet, dass** die Empfangs- und Auswerteeinheit (39) lediglich ein Spektrometer umfasst, insbesondere mit lediglich einer Detektorzeile, welches dazu eingerichtet ist, die Intensitäten des vom Messobjekt (34) reflektierten und zurück durch die erste konfokale Apertur (29, 53) oder die dritte konfokale Apertur (55) getretenen Messlichts in Abhängigkeit der Wellenlänge zu messen als auch die Intensitäten des vom Messobjekt (34) reflektierten und zurück durch die zweite konfokale Apertur (30, 54) oder die vierte konfokale Apertur (56) getretenes Messlichts in Abhängigkeit der Wellenlänge zu messen.

6. Messvorrichtung nach Anspruch 5, **dadurch gekennzeichnet, dass** ein Messtakt des Spektrometers mit den zeitlichen Schalt-Intervallen der ersten und zweiten Lichtquelle (21, 22) synchronisiert ist.

7. Messvorrichtung nach einem der vorangegangenen Ansprüche, **dadurch gekennzeichnet, dass** die dritte konfokale Apertur (55) durch das Ende eines dritten Lichtwellenleiters (57) gebildet wird und die vierte konfokale Apertur (56) durch das Ende eines vierten Lichtwellenleiters (58) gebildet wird, wobei die erste und dritte konfokale Apertur (53, 55) konfokal zueinander sind und die zweite und vierte konfokale Apertur (54, 56) konfokal zueinander sind und wobei der Durchmesser des dritten Lichtwellenleiters (57) dem Durchmesser des ersten Lichtwellenleiters (51) entspricht und der Durchmesser des vierten Lichtwellenleiters (58) dem Durchmesser des zweiten Lichtwellenleiters (52) entspricht.

8. Messvorrichtung nach einem der vorangegangenen Ansprüche, **dadurch gekennzeichnet, dass** der erste Lichtwellenleiter (26, 51) einen Durchmesser von 75-125 µm, insbesondere 100 µm, hat und der zweite Lichtwellenleiter (28, 52) einen Durchmesser von 10-50 µm, insbesondere 25 µm, hat.

9. Messvorrichtung nach einem der vorangegangenen Ansprüche, **dadurch gekennzeichnet, dass** Abbildungsoptik (31) und Messobjekt (34) quer zur optischen Achse der Abbildungsoptik (31) relativ zueinander bewegt werden, so dass Messdaten an mehreren Stellen des Messobjektes (34) aufgenommen werden.

10. Messvorrichtung nach einem der vorangegangenen Ansprüche, **dadurch gekennzeichnet, dass** sie dazu eingerichtet ist, die Messung an einem Messobjekt (34) durchzuführen, das aus Glas ist, insbesondere an einem Behälter aus Glas.

11. Optische Messvorrichtung zur Messung von Abständen und/oder Dicken eines Messobjekts (34), umfassend
eine erste Lichtquelle (21), welche polychromatisches Messlicht emittiert,
eine erste Lochblende, welche eine erste konfokale Apertur bildet,
eine Abbildungsoptik (31), welche geeignet ist, eine chromatische Fokusverschiebung des Messlichts hervorzurufen und die erste konfokale Apertur (29, 53) in einen Messbereich abzubilden, wobei verschiedene Wellenlängen in verschiedenen Höhen fokussiert sind, wobei vom Messobjekt (34) reflektiertes Messlicht wieder zurück auf die erste konfokale Apertur (29) oder eine dritte konfokale Apertur (55) abgebildet wird,
eine Empfangs- und Auswerteeinheit (39), welche ausgebildet ist, um die Intensität des vom Messobjekt (34) reflektierten und zurück durch die erste konfokale Apertur (29) oder dritte konfokale Apertur (55) getretenes Messlicht in Abhängigkeit der Wellenlänge zu messen und daraus Abstände und/oder Dicken zu bestimmen,
**dadurch gekennzeichnet, dass**
die Messvorrichtung eine zweite Lochblende umfasst, welche eine zweite konfokale Apertur (30, 54) bildet, wobei der Durchmesser der zweiten konfokalen Apertur (30, 54) größer ist als der Durchmesser der ersten konfokalen Apertur (29, 53), und dass
die Empfangs- und Auswerteeinheit (39) ausgebildet ist, auch die Intensität des vom Messobjekt (34) reflektierten und zurück durch die zweite konfokale Apertur (30, 54) oder eine vierte konfokale Apertur (56) getretenen Messlichts in Abhängigkeit der Wellenlänge zu messen und daraus Abstände und/oder Dicken zu bestimmen.

12. Verfahren zur optischen Messung von Abständen und/oder Dicken eines Messobjekts (34), wobei
durch eine erste konfokale Apertur (29, 51) tretendes polychromatisches Licht durch ein Abbildungsoptik (31) mit chromatischer Fokusverschiebung auf das Messobjekt (34) abgebildet wird,
die erste konfokale Apertur (29, 51) durch ein Ende eines ersten Lichtwellenleiters gebildet (26) wird, und
ein erstes Spektrum des vom Messobjekt (34) reflektierten und durch die Abbildungsoptik (31) und die erste konfokale Apertur (29, 51) oder eine dritte konfokale Apertur (55) und den ersten Lichtwellenleiters (26) oder einen dritten Lichtwellenleiter (57) getretenes Licht generiert wird,
**dadurch gekennzeichnet, dass**
eine zweite konfokale Apertur (30, 54), gebildet durch das Ende eines zweiten Lichtwellenleiters (28, 52), ebenfalls durch die Abbildungsoptik (31) auf das Messobjekt (34) abgebildet wird, wobei der Querschnitt des zweiten Lichtwellenleiters (28, 52) größer ist als der Querschnitt des ersten Lichtwellenleiters (26, 51), und dass ein zweites Spektrum des vom Messobjekt (34) reflektierten und durch die Abbildungsoptik (31) und die zweite konfokale Apertur (30, 54) oder eine vierte konfokale Apertur (56) und den zweiten Lichtwellenleiter (28, 52) oder einen vierten Lichtwellenleiter (58) getretenes Licht generiert wird.

13. Verfahren nach Anspruch 12, **dadurch gekennzeichnet, dass** jeweils in wiederholten zeitlichen Intervallen Licht abwechselnd durch entweder den ersten Lichtwellenleiter (26, 51) oder den zweiten Lichtwellenleiter (28, 52) auf das Messobjekt (34) geleitet wird, wobei das erste Spektrum jeweils während den Intervallen generiert wird, in denen Licht durch den ersten Lichtwellenleiter (26, 51) auf das Messobjekt (34) geleitet wird und das zweite Spektrum jeweils während den Intervallen generiert wird, in denen Licht durch den zweiten Lichtwellenleiter (28, 52) auf das Messobjekt (34) geleitet wird.

14. Verfahren nach Anspruch 12 oder 13, **dadurch gekennzeichnet, dass** ein charakteristischer Wert, insbesondere ein lokales Maximum der Intensität des ersten Spektrums bestimmt wird und mindestens ein Abstands- oder Dickenwert aus dem ersten Spektrum abgeleitet und ausgegeben wird, wenn der charakteristische Wert oberhalb eines Grenzwerts liegt, wobei mindestens ein Abstands- oder Dickenwert aus dem zweiten Spektrum abgeleitet und ausgegeben wird, wenn der charakteristische Wert nicht oberhalb des Grenzwerts liegt.

## Claims

1. Optical measuring device for measuring distances and/or thicknesses of a measuring object (34), comprising
a first light source (21) which emits polychromatic measuring light,
a first optical waveguide (26, 51) through which measuring light passes and the end of which forms a first confocal aperture (29, 53),
an imaging optical system (31) which is suitable for causing a chromatic focus shift of the measuring light and for imaging the first confocal aperture (29, 53) in a measuring range, wherein different wavelengths are focused at different heights, and wherein measuring light reflected by the measuring object (34) is again imaged back onto the first confocal aperture (29) or onto a third confocal aperture (55),
a receiving and evaluating unit (39) which is designed to measure the intensity of the measuring light reflected by the measuring object (34) and back through the first confocal aperture (29) or a third confocal aperture (55) as a function of the wavelength and to determine distances and/or thicknesses therefrom,
**characterised in that**
the measuring device comprises a second optical waveguide (28, 52) which is guided in parallel with the first optical waveguide (26, 51) and whose end forms a second confocal aperture (30, 54), the diameter of the second confocal aperture (30, 54) being greater than the diameter of the first confocal aperture (29, 53), and **in that**
the receiving and evaluating unit (39) is designed to also measure the intensity of the measuring light reflected by the measuring object (34) and passed back through the second confocal aperture (30, 54) or a fourth confocal aperture (56) as a function of the wavelength and to determine distances and/or thicknesses therefrom.

2. Measuring device according to claim 1, **characterised in that** the receiving and evaluating unit (39) is set up to generate a first spectrum and a second spectrum, the first spectrum representing intensities of measuring light passed through the first confocal aperture (29, 53) or third confocal aperture (55) as a function of the wavelength and the second spectrum representing intensities of measuring light passed through the second confocal aperture (30, 54) or fourth confocal aperture (56) as a function of the wavelength.

3. Measuring device according to claim 1 or 2, **characterised in that** the measuring device comprises a second light source (22).

4. Measuring device according to claim 3, **characterised in that** the first light source (21) and the second light source (22) are each operated at time intervals, wherein the first light source (21) and the second light source (22) are not switched on simultaneously.

5. Measuring device according to claim 4, **characterised in that** the receiving and evaluating unit (39) comprises only one spectrometer, in particular with only one detector line, which is set up to measure the intensities of the measuring light reflected by the measuring object (34) and passed back through the first confocal aperture (29, 53) or the third confocal aperture (55) as a function of the wavelength, and also to measure the intensities of the measurement light reflected by the measurement object (34) and passed back through the second confocal aperture (30, 54) or the fourth confocal aperture (56) as a function of the wavelength.

6. Measuring device according to claim 5, **characterized in that** a measuring cycle of the spectrometer is synchronised with the temporal switching intervals of the first and second light sources (21, 22).

7. A measuring device according to any one of the preceding claims, **characterised in that** the third confocal aperture (55) is formed by the end of a third optical waveguide (57) and the fourth confocal aperture (56) is formed by the end of a fourth optical waveguide (58), wherein the first and third confocal apertures (53, 55) are confocal to each other and the second and fourth confocal apertures (54, 56) are confocal to each other, and wherein the diameter of the third optical waveguide (57) corresponds to the diameter of the first optical waveguide (57), 55) are confocal to each other and the second and fourth confocal apertures (54, 56) are confocal to each other and wherein the diameter of the third optical waveguide (57) corresponds to the diameter of the first optical waveguide (51) and the diameter of the fourth optical waveguide (58) corresponds to the diameter of the second optical waveguide (52).

8. Measuring device according to one of the preceding claims, **characterized in that** the first optical waveguide (26, 51) has a diameter of 75-125 µm, in particular 100 µm, and the second optical waveguide (28, 52) has a diameter of 10-50 µm, in particular 25 µm.

9. Measuring device according to one of the preceding claims, **characterised in that** imaging optics (31) and measuring object (34) are moved relative to one another transversely to the optical axis of the imaging optics (31), so that measurement data are recorded at several points on the measuring object (34).

10. Measuring device according to one of the preceding claims, **characterised in that** it is set up to carry out the measurement on a measuring object (34) which is made of glass, in particular on a container made of glass.

11. An optical measuring device for measuring distances and/or thicknesses of a measuring object (34), comprising
a first light source (21) emitting polychromatic measuring light,
a first pinhole forming a first confocal aperture,
an imaging optics (31) which is suitable to cause a chromatic focus shift of the measuring light and to image the first confocal aperture (29, 53) in a measuring range, whereby different wavelengths are focused at different heights, whereby measuring light reflected from the measuring object (34) is imaged back onto the first confocal aperture (29) or a third confocal aperture (55),
a receiving and evaluating unit (39) which is designed to measure the intensity of the measuring light reflected from the measuring object (34) and back through the first confocal aperture (29) or third confocal aperture (55) as a function of the wavelength and to determine distances and/or thicknesses therefrom,
**characterised in that**
the measuring device comprises a second pinhole which forms a second confocal aperture (30, 54), the diameter of the second confocal aperture (30, 54) being larger than the diameter of the first confocal aperture (29, 53), and **in that**
the receiving and evaluating unit (39) is designed to also measure the intensity of the measuring light reflected by the measuring object (34) and passed back through the second confocal aperture (30, 54) or a fourth confocal aperture (56) as a function of the wavelength and to determine distances and/or thicknesses therefrom.

12. Method for the optical measurement of distances and/or thicknesses of a measuring object (34), wherein
polychromatic light passing through a first confocal aperture (29, 51) is imaged onto the measurement object (34) by an imaging optical system (31) with chromatic focus shift,
the first confocal aperture (29, 51) is formed (26) by one end of a first optical waveguide, and
a first spectrum of the light reflected from the measurement object (34) and passed through the imaging optics (31) and the first confocal aperture (29, 51) or a third confocal aperture (55) and the first optical waveguide (26) or a third optical waveguide (57) is generated,
**characterised in that**
a second confocal aperture (30, 54), formed by the end of a second optical waveguide (28, 52), is also imaged onto the measurement object (34) by the imaging optics (31), the cross-section of the second optical waveguide (28, 52) being larger than the cross-section of the first optical waveguide (26, 51), and **in that**
a second spectrum of the light reflected by the measurement object (34) and passed through the imaging optics (31) and the second confocal aperture (30, 54) or a fourth confocal aperture (56) and the second optical waveguide (28, 52) or a fourth optical waveguide (58) is generated.

13. Method according to claim 12, **characterized in that** light is alternately guided through either the first optical waveguide (26, 51) or the second optical waveguide (28, 52) onto the measurement object (34) in repeated temporal intervals, wherein the first spectrum is generated during the intervals, the first spectrum being generated during the intervals in which light is guided through the first optical waveguide (26, 51) onto the measurement object (34) and the second spectrum being generated during the intervals in which light is guided through the second optical waveguide (28, 52) onto the measurement object (34).

14. Method according to claim 12 or 13, **characterized in that** a characteristic value, in particular a local maximum of the intensity of the first spectrum, is determined and at least one distance or thickness value is derived from the first spectrum and output if the characteristic value is above a limit value, at least one distance or thickness value being derived from the second spectrum and output if the characteristic value is not above the limit value.

## Revendications

1. Dispositif de mesure optique pour mesurer des distances et/ou des épaisseurs d'un objet de mesure (34), comprenant
une première source lumineuse (21) qui émet une lumière de mesure polychromatique,
un premier guide d'ondes optiques (26, 51) à travers lequel passe la lumière de mesure et dont l'extrémité forme une première ouverture confocale (29, 53)
un système optique d'imagerie (31) qui est approprié pour provoquer un décalage de focalisation chromatique de la lumière de mesure et pour imager la première ouverture confocale (29, 53) dans une plage de mesure, dans laquelle différentes longueurs d'onde sont focalisées à différentes hauteurs, et dans laquelle la lumière de mesure réfléchie par l'objet de mesure (34) est à nouveau imagée sur la première ouverture confocale (29) ou sur une troisième ouverture confocale (55),
une unité de réception et d'évaluation (39) qui est conçue pour mesurer l'intensité de la lumière de mesure réfléchie par l'objet de mesure (34) et renvoyée à travers la première ouverture confocale (29) ou une troisième ouverture confocale (55) en fonction de la longueur d'onde et pour en déterminer les distances et/ou les épaisseurs,
**caractérisé en ce que**
le dispositif de mesure comprend un deuxième guide d'ondes optiques (28, 52) qui est guidé parallèlement au premier guide d'ondes optiques (26, 51) et dont l'extrémité forme une deuxième ouverture confocale (30, 54), le diamètre de la deuxième ouverture confocale (30, 54) étant supérieur au diamètre de la première ouverture confocale (29, 53), et **en ce que**
l'unité de réception et d'évaluation (39) est conçue pour mesurer également l'intensité de la lumière de mesure réfléchie par l'objet de mesure (34) et renvoyée à travers la deuxième ouverture confocale (30, 54) ou une quatrième ouverture confocale (56) en fonction de la longueur d'onde et pour déterminer des distances et/ou des épaisseurs à partir de celles-ci. Vorrichtung

2. Dispositif de mesure selon la revendication 1, **caractérisé en ce que** l'unité de réception et d'évaluation (39) est agencée pour générer un premier spectre et un second spectre, dans lequel le premier spectre représente les intensités de la lumière de mesure passée à travers la première ouverture confocale (29, 53) ou la troisième ouverture confocale (55) en fonction de la longueur d'onde et le second spectre représente les intensités de la lumière de mesure passée à travers la seconde ouverture confocale (30, 54) ou la quatrième ouverture confocale (56) en fonction de la longueur d'onde.

3. Dispositif de mesure selon la revendication 1 ou 2, **caractérisé en ce que** le dispositif de mesure comprend une deuxième source de lumière (22).

4. Dispositif de mesure selon la revendication 3, **caractérisé en ce que** la première source de lumière (21) et la deuxième source de lumière (22) sont chacune exploitées à des intervalles de temps, la première source de lumière (21) et la deuxième source de lumière (22) n'étant pas allumées simultanément.

5. Dispositif de mesure selon la revendication 4, **caractérisé en ce que** l'unité de réception et d'évaluation (39) ne comprend qu'un seul spectromètre, en particulier avec une seule ligne de détection, qui est conçu pour mesurer les intensités de la lumière réfléchie par l'objet de mesure (34) et retransmise à travers la première ouverture confocale (29), 53) ou la troisième ouverture confocale (55) en fonction de la longueur d'onde, ainsi que pour mesurer les intensités de la lumière de mesure réfléchie par l'objet de mesure (34) et renvoyée à travers la deuxième ouverture confocale (30, 54) ou la quatrième ouverture confocale (56) en fonction de la longueur d'onde.

6. Dispositif de mesure selon la revendication 5, **caractérisé en ce qu'**une course de mesure du spectromètre est synchronisée avec les intervalles de commutation temporelle des première et deuxième sources lumineuses (21, 22).

7. Dispositif de mesure selon l'une quelconque des revendications précédentes, **caractérisé en ce que** la troisième ouverture confocale (55) est formée par l'extrémité d'un troisième guide d'onde optique (57) et la quatrième ouverture confocale (56) est formée par l'extrémité d'un quatrième guide d'onde optique (58), dans lequel les première et troisième ouvertures confocales (53, 55) sont confocales l'une par rapport à l'autre et la quatrième ouverture confocale (56) est formée par l'extrémité d'un quatrième guide d'onde optique (58), 55) sont confocales l'une par rapport à l'autre et les deuxième et quatrième ouvertures confocales (54, 56) sont confocales l'une par rapport à l'autre et dans lequel le diamètre du troisième guide d'ondes optiques (57) correspond au diamètre du premier guide d'ondes optiques (51) et le diamètre du quatrième guide d'ondes optiques (58) correspond au diamètre du deuxième guide d'ondes optiques (52).

8. Dispositif de mesure selon l'une des revendications précédentes, **caractérisé en ce que** le premier guide d'onde optique (26, 51) a un diamètre de 75-125 µm, notamment 100 µm, et le deuxième guide d'onde optique (28, 52) a un diamètre de 10-50 µm, notamment 25 µm.

9. Dispositif de mesure selon l'une des revendications précédentes, **caractérisé en ce que** l'optique de reproduction (31) et l'objet de mesure (34) sont déplacés l'un par rapport à l'autre transversalement à l'axe optique de l'optique de reproduction (31), de sorte que les données de mesure sont enregistrées en plusieurs points de l'objet de mesure (34).

10. Dispositif de mesure selon l'une des revendications précédentes, **caractérisé en ce qu'**il est agencé pour effectuer la mesure sur un objet de mesure (34) qui est en verre, notamment sur un récipient en verre.

11. Dispositif de mesure optique pour mesurer des distances et/ou des épaisseurs d'un objet de mesure (34), comprenant
une première source lumineuse (21) émettant une lumière de mesure polychromatique,
un premier trou d'épingle formant une première ouverture confocale,
une optique d'imagerie (31) qui est appropriée pour provoquer un décalage de focalisation chromatique de la lumière de mesure et pour imager la première ouverture confocale (29, 53) dans une plage de mesure, moyennant quoi différentes longueurs d'onde sont focalisées à différentes hauteurs, moyennant quoi la lumière de mesure réfléchie par l'objet de mesure (34) est imagée en retour sur la première ouverture confocale (29) ou une troisième ouverture confocale (55),
une unité de réception et d'évaluation (39) qui est conçue pour mesurer l'intensité de la lumière de mesure réfléchie par l'objet de mesure (34) et renvoyée par la première ouverture confocale (29) ou la troisième ouverture confocale (55) en fonction de la longueur d'onde et pour déterminer des distances et/ou des épaisseurs à partir de celles-ci,
**caractérisé en ce que**
le dispositif de mesure comprend un deuxième trou d'épingle qui forme une deuxième ouverture confocale (30, 54), le diamètre de la deuxième ouverture confocale (30, 54) étant plus grand que le diamètre de la première ouverture confocale (29, 53), et **en ce que**
l'unité de réception et d'évaluation (39) est conçue pour mesurer également l'intensité de la lumière de mesure réfléchie par l'objet de mesure (34) et renvoyée par la deuxième ouverture confocale (30, 54) ou une quatrième ouverture confocale (56) en fonction de la longueur d'onde et pour déterminer des distances et/ou des épaisseurs à partir de celles-ci.

12. Procédé de mesure optique de distances et/ou d'épaisseurs d'un objet de mesure (34), dans lequel
la lumière polychromatique passant à travers une première ouverture confocale (29, 51) est imagée sur l'objet de mesure (34) par une optique d'imagerie (31) avec un décalage de focalisation chromatique,
la première ouverture confocale (29, 51) est formée (26) par une extrémité d'un premier guide d'ondes optique, et
un premier spectre de la lumière réfléchie par l'objet de mesure (34) et passée à travers l'optique d'imagerie (31) et la première ouverture confocale (29, 51) ou une troisième ouverture confocale (55) et le premier guide d'ondes optique (26) ou un troisième guide d'ondes optique (57) est généré,
**caractérisé en ce que**
une deuxième ouverture confocale (30, 54), formée par l'extrémité d'un deuxième guide d'ondes optiques (28, 52), est également imagée sur l'objet de mesure (34) par l'optique d'imagerie (31), la section transversale du deuxième guide d'ondes optiques (28, 52) étant plus grande que la section transversale du premier guide d'ondes optiques (26, 51), et **en ce que**
un deuxième spectre de la lumière réfléchie par l'objet de mesure (34) et passée à travers l'optique d'imagerie (31) et la deuxième ouverture confocale (30, 54) ou une quatrième ouverture confocale (56) et le deuxième guide d'ondes optique (28, 52) ou un quatrième guide d'ondes optique (58) est généré.

13. Procédé selon la revendication 12, **caractérisé en ce que** la lumière est guidée alternativement à travers soit le premier guide d'onde optique (26, 51) soit le second guide d'onde optique (28, 52) sur l'objet de mesure (34) dans des intervalles temporels répétés, dans lequel le premier spectre est généré pendant les intervalles, le premier spectre étant généré pendant les intervalles dans lesquels la lumière est guidée à travers le premier guide d'ondes optiques (26, 51) sur l'objet de mesure (34) et le second spectre étant généré pendant les intervalles dans lesquels la lumière est guidée à travers le second guide d'ondes optiques (28, 52) sur l'objet de mesure (34).

14. Procédé selon la revendication 12 ou 13, **caractérisé en ce qu'**une valeur caractéristique, en particulier un maximum local de l'intensité du premier spectre, est déterminée et au moins une valeur de distance ou d'épaisseur est dérivée du premier spectre et sortie si la valeur caractéristique est supérieure à une valeur limite, au moins une valeur de distance ou d'épaisseur étant dérivée du deuxième spectre et sortie si la valeur caractéristique n'est pas supérieure à la valeur limite.
